(19) Europäisches Patentamt
European Patent Office
Office européen des brevets

(11) **EP 4 610 781 A1**

(12) **EUROPEAN PATENT APPLICATION**

(43) Date of publication:
**03.09.2025 Bulletin 2025/36**

(21) Application number: **25155388.9**

(22) Date of filing: **31.01.2025**

(51) International Patent Classification (IPC):
***G06F 1/324*** (2019.01)    ***G06F 1/3296*** (2019.01)

(52) Cooperative Patent Classification (CPC):
**G06F 1/3296; G06F 1/324**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2024 US 202418588766**

(71) Applicant: **Microsoft Technology Licensing, LLC Redmond, WA 98052 (US)**

(72) Inventors:
• **KANTHI, Basavaraj**
  **Redmond, Washington (US)**
• **JAHAGIRDAR, Sanjeev S**
  **Redmond, Washington (US)**

(74) Representative: **CMS Cameron McKenna Nabarro Olswang LLP**
**Cannon Place**
**78 Cannon Street**
**London EC4N 6AF (GB)**

(54) **LOAD-VARIANCE MANAGEMENT FOR VOLTAGE-REGULATED SYSTEMS**

(57) A method for controlling the load-variance rate at which one or more integrated circuits vary a load on a voltage regulator comprises (a) sensing a die voltage on a semiconductor die of the one or more integrated circuits; (b) setting the load-variance rate to a first rate if the die voltage sensed is within a predetermined interval of a setpoint voltage of the voltage regulator; and (c) setting the load-variance rate to second rate, lower than the first rate, if the die voltage sensed is outside of the predetermined interval of the setpoint voltage of the voltage regulator.

*FIG. 1*

EP 4 610 781 A1

**Description**

BACKGROUND

Various electronic systems, including computer systems, require line- and load-regulated supply voltages. State-of-the-art voltage regulation balances conflicting demands on power efficiency, regulation interval, thermal design, and transient response.

SUMMARY

One aspect of this disclosure relates to a system comprising a voltage regulator, an integrated circuit arranged on a semiconductor die, and a load-variance manager. The voltage regulator is configured to regulate a die voltage on the semiconductor die. The setpoint of the voltage regulator approaches a minimum allowable voltage at full load and a maximum allowable voltage at minimal load. The integrated circuit is configured to vary the load on the voltage regulator at a load-variance rate. Operatively coupled to the integrated circuit, the load-variance manager is configured to sense the die voltage and select a clock frequency based on whether the die voltage exceeds a predetermined interval of the setpoint voltage. By selection of the clock frequency, the load-variance manager sets the load-variance rate to a highest available rate at which the die voltage stays within the predetermined interval.

Another aspect of this disclosure relates to a method for controlling the load-variance rate at which one or more integrated circuits vary a load on a voltage regulator. The method comprises (a) sensing a die voltage on a semiconductor die of the one or more integrated circuits; (b) setting the load-variance rate to a first rate if the die voltage sensed is within a predetermined interval of a setpoint voltage of the voltage regulator; and (c) setting the load-variance rate to second rate, lower than the first rate, if the die voltage sensed is outside of the predetermined interval of the setpoint voltage of the voltage regulator.

This Summary is provided in order to introduce in simplified form a selection of concepts that are further described in the Detailed Description. This Summary is not intended to identify key features or essential features of the claimed subject matter, nor is it intended to be used to limit the scope of the claimed subject matter. The claimed subject matter is not limited to implementations that solve any disadvantages noted in any part of this disclosure.

BRIEF DESCRIPTION OF THE DRAWINGS

FIG. 1 shows aspects of an example computer system.

FIGS. 2A and 2B show portions of example circuit boards of a computer system.

FIG. 3 shows aspects of an example voltage-regulator module.

FIG. 4 provides an illustrative, theoretic comparison between adaptive voltage positioning (AVP) and non-AVP voltage regulation during transient-load conditions.

FIGS. 5A and 5B provide illustrative, theoretic comparisons between voltage-regulator load current and corresponding output-voltage waveforms, using AVP.

FIG. 6 illustrates a theoretic difference in die voltage with respect to load current on a die with supply voltage regulated using AVP.

FIG. 7 shows aspects of an example circuit board including one or more load-varying ICs configured to change the clock speed of an example processor.

FIG. 8 shows aspects of an example circuit board including one or more load-varying ICs configured to energize or de-energize a power-gated domain.

FIG. 9 shows aspects of an example method for controlling a load-variance rate at which one or more load-varying integrated circuits vary a load on a voltage regulator.

DETAILED DESCRIPTION

A modern computer system may employ supply-voltage regulation on various levels, including the semiconductor-die level. Nevertheless, in scenarios in which significant load transients are encountered, even state-of-the-art, on-die voltage regulation may fail to maintain the supply voltage between allowable limits. A conventional remedy for this issue is to proactively limit the load transients to a magnitude guaranteed to not overwhelm the supply-voltage regulation. For instance, processor clock-speed adjustments may be enacted incrementally, at ramp rates slow enough to keep the regulated supply voltage within allowable limits. When a power-gated domain is energized or de-energized, the voltage supply to the domain is ramped up or down at a rate that will not overwhelm the voltage regulator. Conventionally, such rate limits are set by engineers during the design phase of the computer system.

One disadvantage of the conventional approach is that both the magnitude of a given load transient and the corresponding compliance of a voltage regulator may be known only to an approximation, or even a heuristic. Accordingly, an engineer is liable to set load-transient limits to conservatively low values, in order to avoid any possibility of supply-voltage dysregulation. The cost of that approach is latency. Virtually any load-varying process may be programmed to take longer than it needs to; integrated over many such processes, the increased latency may be evident to the user.

In order to address this issue and provide further advantages, this disclosure presents technology for setting load-variance rates dynamically, based on the observed compliance of the voltage regulator. A load-variance manager senses the die voltage of a load-varying component versus the regulation setpoint and controls the rate of change of the load based on the difference, in a closed loop manner. In some examples, the rate may be set to the highest available rate at which the die voltage stays within a predetermined interval of the regulation setpoint.

The disclosed approach offers numerous, beneficial technical effects. One technical effect is that the die voltage is guaranteed to remain regulated through the load transient, maintaining the operation of the system. Another technical effect is that the various transitions that may be required between different load levels are achieved in the shortest time possible, for improved system performance.

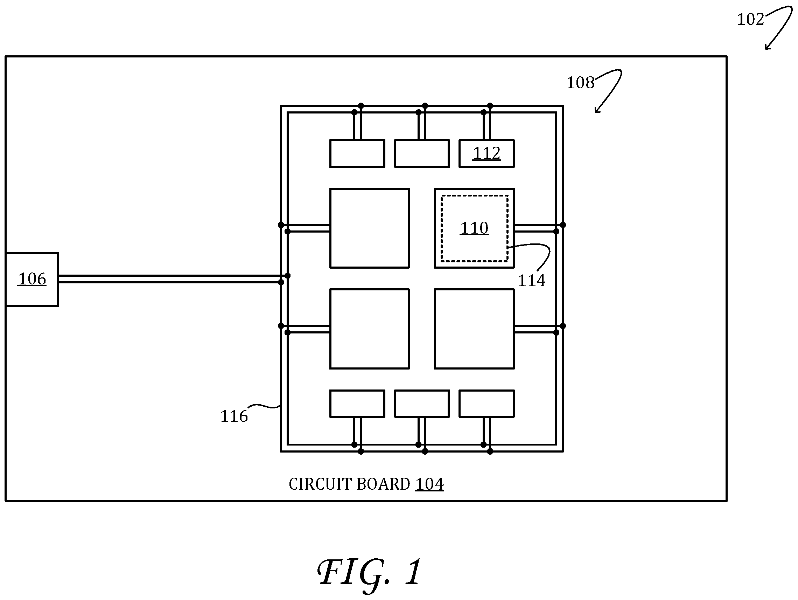

Turning now to the drawings, FIG. 1 shows aspects of an example computer system 102. The computer system may take the form of a desktop, laptop, or tablet computer system, a smart phone or wearable computer system, a game system, server system, or virtually any type of digital computer system.

Computer system 102 includes at least one circuit board 104 having a power connector 106. Each circuit board includes various integrated circuits (ICs). Some of the ICs are arranged within a central processing unit (CPU) 108. CPU 108 includes *inter alia* one or more processor cores 110 and associated computer memory 112. The computer memory may include volatile and non-volatile memory, read-only memory (ROM), random-access memory (RAM), and so on. By way of example, each processor core 110 may be formed via state-of-the-art semiconductor processing on a separate semiconductor die 114. In this manner, the die may support any, some, or all of the one or more processor cores and/or memory. Other ICs on circuit board 104 may be formed in the same way. Some ICs may include two or more dies, which may be interconnected. In the illustrated example, circuit board 104 may be a motherboard of computer system 102. In other examples, the circuit board may be a graphics card with one or more graphics processing units (GPUs) in lieu of CPU 108. Generally speaking, this disclosure applies to all kinds of circuit boards as well as systems of ICs that are not necessarily arranged on a circuit board *per se.*

Continuing in FIG. 1, power-supply lines 116 are etched into, printed onto, or otherwise arranged on circuit board 104. The power-supply lines carry electric power from power connector 106 to the ICs and other components arranged on the circuit board. Generally speaking, the electric power comprises one or more supply voltages (electric potential differences) separated across two or more conductors. The power-supply lines of FIG. 1 are two-wire power-supply lines configured to carry unipolar supply voltage (V+ and ground (GND)). In typical examples, V+ may be +12 volts, +5 volts, +3.3 volts, or +1.2 volts. In other examples, three- or four-wire power-supply lines may be used to carry a desired plurality of supply voltages to the ICs on the circuit board. In some examples, the power-supply lines may be configured to carry bipolar supply voltage (V+, V-, and GND). In one example, V+ = +5 volts and V- = -5 volts.

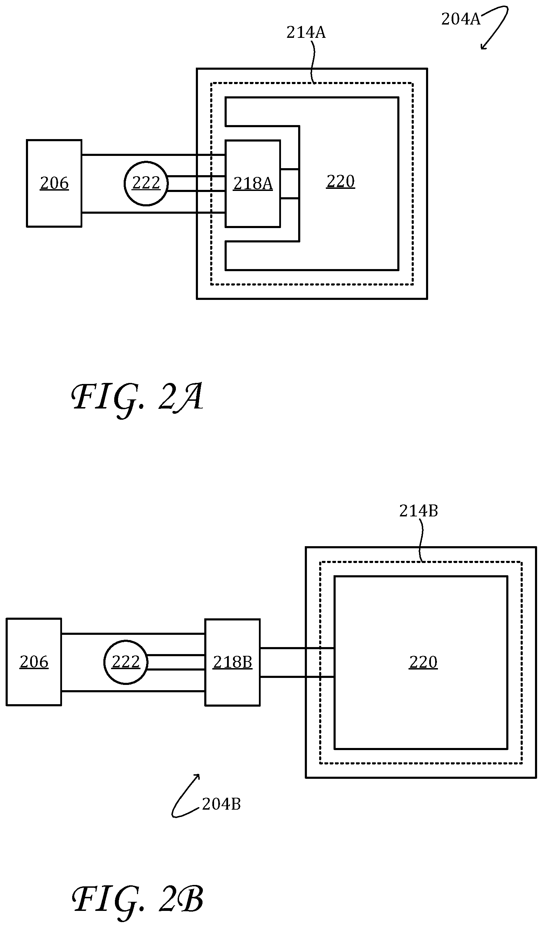

FIGS. 2A and 2B show portions of example circuit boards consonant with circuit board 104 of FIG. 1. These circuit boards receive supply voltage via a power connector 206. In some examples, the supply voltage may derive from one or more batteries. In some examples, the supply voltage may derive from a switching power supply connected to an alternating-current (AC) source. In some examples, the supply voltage may derive from a full-bridge rectifier and transformer-type power supply connected to an AC source. Optionally, the power supply may be external to the computer system in which the circuit board is installed. In some examples, a supply voltage received via power connector 206 may be preconditioned via line and/or load regulation sufficient to keep the voltage level within a broad interval of the desired setpoint voltage-*e.g.*, ±10%. Nevertheless, that degree of supply-voltage regulation may be insufficient for reliable operation of downstream electronic componentry of the computer system.

In order to provide finer voltage regulation, die 214A of circuit board 204A includes an on-die voltage-regulator module 218A integrated within the die and configured to supply finely regulated supply voltage to downstream circuit 220. Typically, the voltage-regulator module is operatively coupled to one or more off-die components, such as capacitor 222, which may be external to the IC in which die 214A is arranged.

In the alternative configuration of FIG. 2B, circuit board 204B includes an off-die voltage-regulator module 218B configured to supply finely regulated supply voltage to die 214B. In some examples, the off-die voltage-regulator module may supply power to other dies and/or ICs on circuit board 204B. On- and off-die voltage-regulator modules 218A and 218B may be substantially similar but also may differ in some respects. In both examples, the voltage regulator 218 is configured to regulate voltage on the semiconductor die 214.

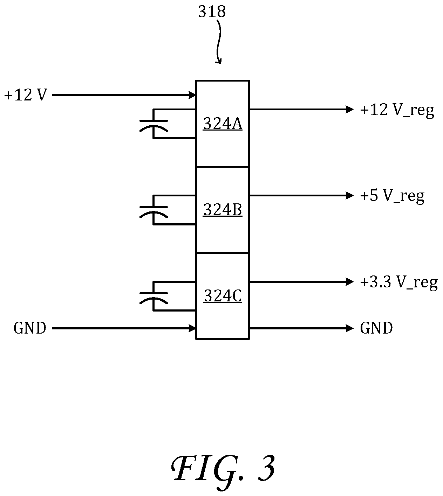

FIG. 3 shows aspects of an example voltage-regulator module 318. A voltage-regulator module includes at least one voltage regulator; the illustrated example shows three voltage regulators, 324A, 324B, and 324C. For bipolar power supplies the voltage-regulator module may include a positive voltage regulator for fine regulation of positive supply voltage V+ and a negative voltage regulator for fine regulation of the negative supply voltage V-. In some examples, each voltage regulator is a linear regulator. In some examples, each voltage regulator is a series regulator. Generally speaking, each voltage regulator may provide both line and load regulation.

In some examples any, some, or all of the voltage regulators 324 may be configured for adaptive voltage positioning (AVP). In this mode of operation, the output voltage level is set slightly higher than the minimum allowable voltage at full load, and slightly lower than the maximum allowable voltage at light load. Accordingly, the setpoint voltage approaches the minimum allowable voltage at full load of the voltage regulator and the maximum allowable voltage at minimal load of the voltage regulator. Stated another way, the setpoint voltage draws closer to the minimum allowable voltage in response to the load current drawing closer to its maximum (full-load conditions), and the setpoint voltage draws closer to the maximum allowable voltage in response to the load current drawing closer to open circuit. At intermediate values of the load current, the setpoint voltage varies monotonically with the load current, taking on intermediate values. The entire voltage-tolerance window of the downstream electronic components is available, therefore, for suppression of supply-voltage excursions during transient-load conditions.

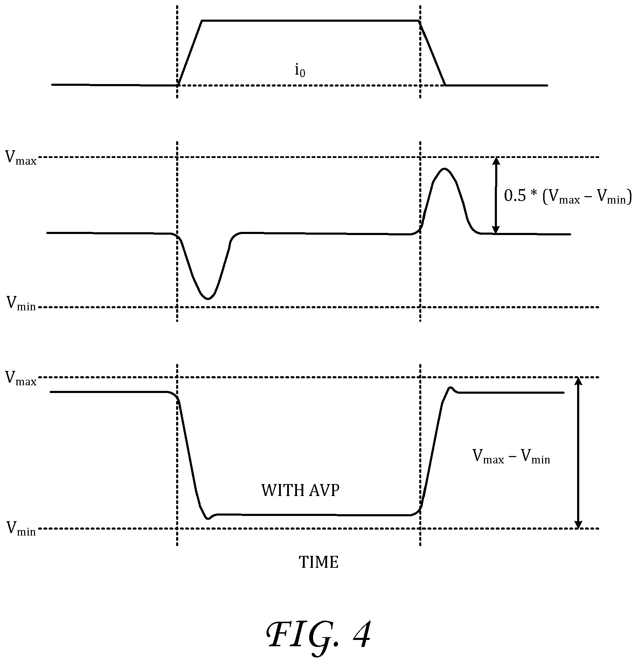

FIG. 4 provides an illustrative theoretic comparison between AVP and non-AVP voltage regulation during transient-load conditions. The comparison between the current, $i_0$, and the output voltage, $v_0$, waveforms illustrates the superior voltage regulation of the AVP design during transient load. The AVP design requires fewer and smaller tank capacitors, thereby reducing the cost of voltage regulation. Another benefit of AVP is that the output power dissipation at full load is reduced, which is helpful in the thermal design of voltage-regulator modules. AVP is also highly performant for meeting processor load-line specifications in computer systems.

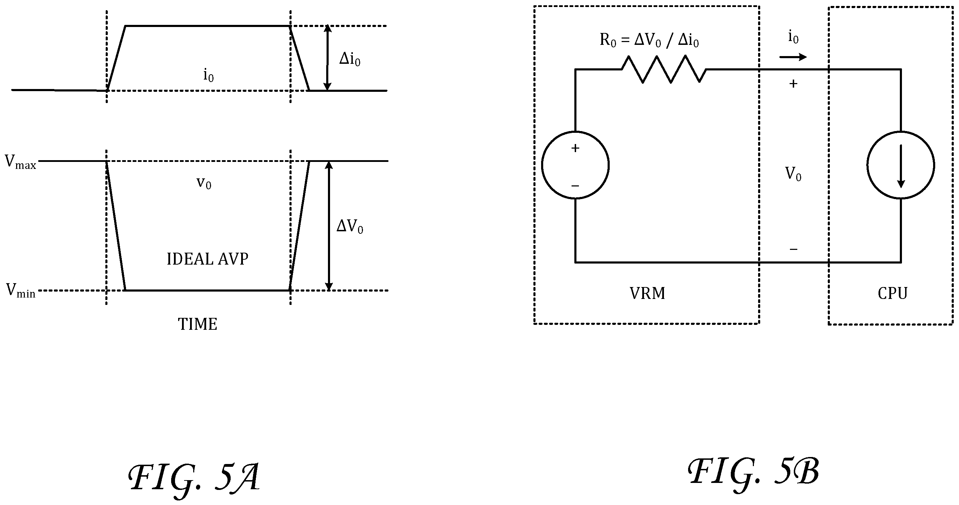

Operationally, AVP is optimized for steady-state voltage regulation. If the transient between the successive steady-state stages has no spikes or oscillations, as in FIG. 5A, then the AVP protocol is optimal, for the transient can take advantage of the entire voltage-tolerance window. As shown in FIGS. 5A and 5B, comparison between the load current, $i_0$, and the corresponding output-voltage, $v_0$, waveforms reveals that an AVP voltage regulator reduces to an ideal voltage source in series with a resistor $R_0 = \Delta v_0 / \Delta i_0$. $R_0$ is also called the 'AVP load line' (AVPLL). In symbols,

$$V_{die} = VID - I * AVPLL,$$

where $I$ is the load current consumed by the die, $V_{die}$ is the die voltage ($V_0$ in FIGS. 5A and 5B), and $VID$ is the setpoint voltage of the voltage regulator ($V_{max}$ in FIGS. 5A and 5B).

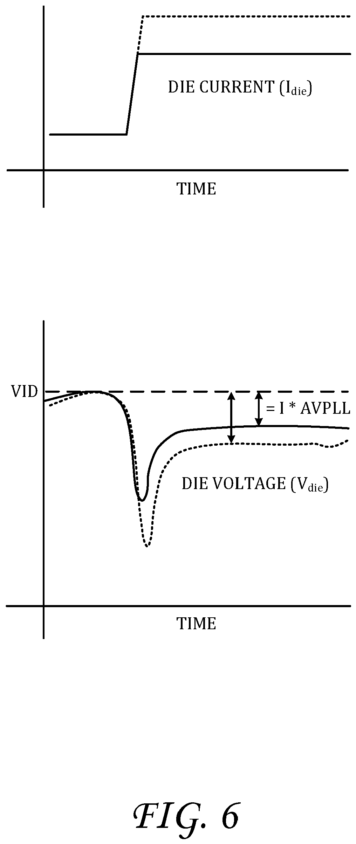

FIG. 6 illustrates the difference in die voltage, $V_{die}$, with respect to load current, $I_{die}$, on a die with supply voltage regulated using AVP. In this plot, $VID$ is the maximum voltage set in the voltage regulator. When the die current decreases, the die voltage increases as predicted by the equation above; when the die current increases, the die voltage decreases.

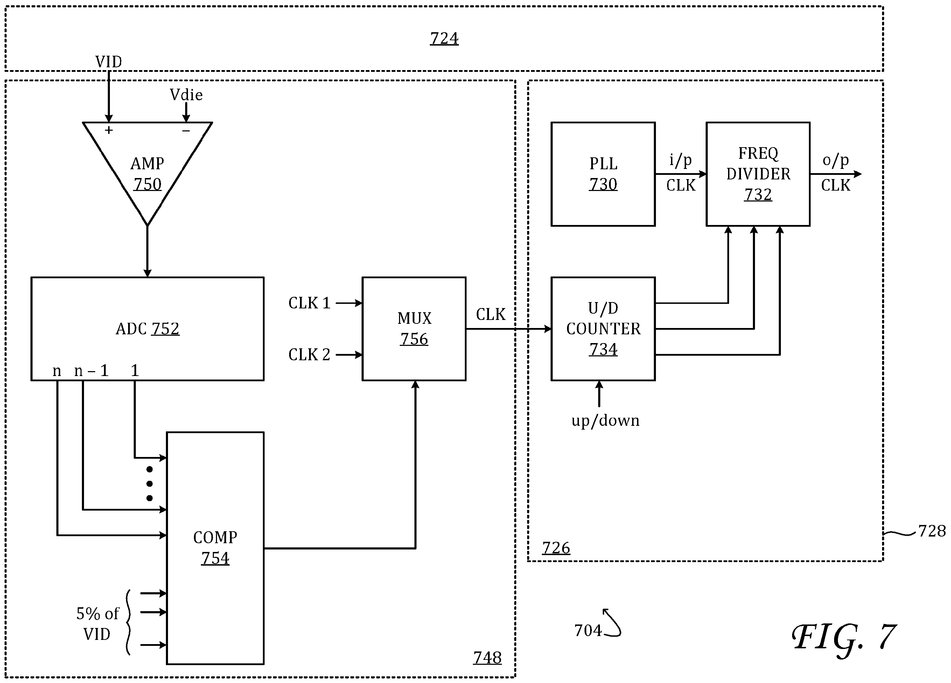

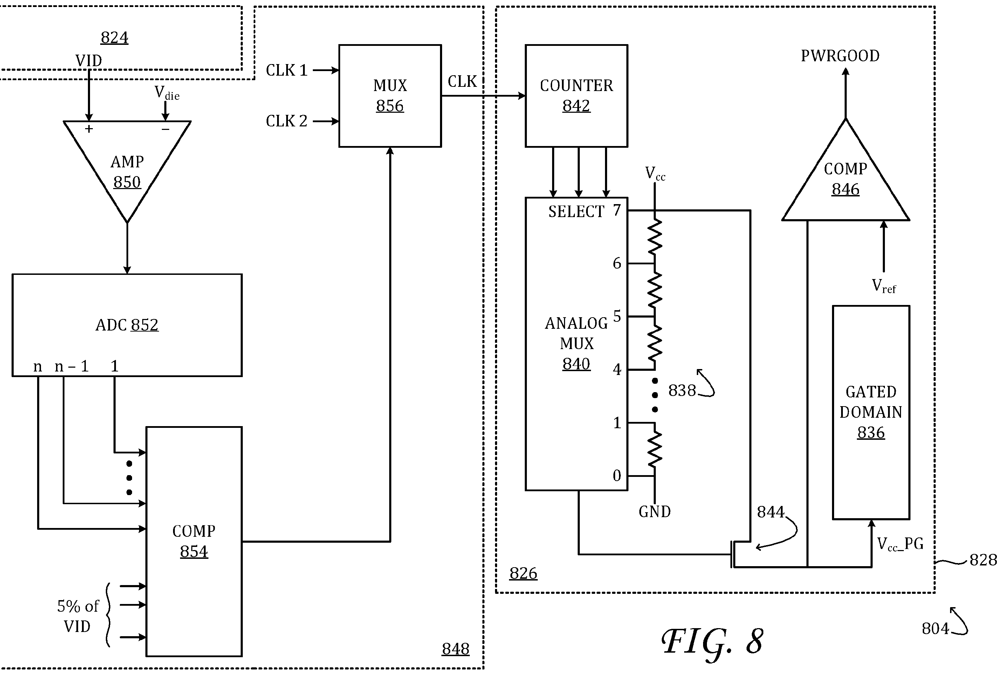

A circuit board of a computer system may include one or more load-varying ICs coupled operatively to a voltage regulator. During operation of the computer system, the one or more load-varying ICs may vary the load on the voltage regulator. In some scenarios, the load-varying ICs may effect significant load changes in a relatively short period of time. This general configuration is illustrated below in specific examples, with reference to FIGS. 7 and 8.

FIG. 7 shows aspects of an example circuit board 704 including one or more load-varying ICs 726 coupled operatively to a voltage regulator 724. In this example, the one or more load-varying ICs are configured to change the clock speed of a processor and/or computer-memory system. In this application, the term 'clock speed' is reserved for the frequency of a timing pulse train distributed widely in a computer system, such as a CPU clock. The more generic term 'clock frequency' may refer to frequencies of this or other timing pulse trains herein. As clock speed increases, a processor draws more current, thereby increasing the load current on the voltage regulator. Briefly, a processor or other IC may include numerous capacitances, each having a capacitive reactance that decreases as the clock speed increases, thereby decreasing the resistance of the equivalent circuit coupled to the voltage regulator. As shown in the drawing, load-varying ICs 726 are arranged on semiconductor die 728. In some examples, voltage regulator 724 may be arranged on the same die, but that aspect is not strictly necessary (*vide supra*). In other examples, the voltage regulator may be external to the die on which the one or more load-varying ICs are arranged.

In order to avoid sudden changes in load current, which may cause supply-voltage dysregulation, the clock speed may be increased or decreased in relatively small steps, controllable in hardware and/or firmware of the circuit board. In this sense, the one or more load-varying ICs 726 may be configured to vary the load on the voltage regulator at a load-variance rate. For example, in a dynamic voltage-frequency scaling (DVFS) system, when the clock speed is to be increased from 1 gigahertz (GHz) to 2 GHz, it can be first ramped down in steps to a low frequency, such as 200 megahertz (MHz), and then ramped up to 2 GHz in relatively small steps. The step size can be 100 MHz or 200 MHz, for example.

In FIG. 7, the one or more load-varying ICs 726 include phase-locked loop (PLL) 730. The input clock, i/p clock, from PLL 730 is provided as input to frequency divider 732. A three-bit input to the frequency divider, from up / down counter 734 determines the scaling factor, which sets the output, o/p, clock speed. For example, if the output of the counter is 111, then no frequency division is applied-i.e., 1X scaling. If the output is 000 then the scaling is 1 / 8X = 0.125X, because there are 3 bits. If the output is 001, then the scaling is 2 / 8X = 0.25X, and so on.

In FIG. 7, the example circuit board 704 includes an example load-variance manager 748. As described hereinabove, the one or more load-varying ICs 726 are configured to vary the load on the voltage regulator 724 at a load-variance rate. Operatively coupled to the one or more load-varying ICs 726, the load-variance manager 748 is configured to sense a die voltage $V_{die}$ on the semiconductor die of the load-varying ICs 726 and to control the load-variance rate in a closed-loop manner based on the die voltage. More specifically, the load-variance manager 748 can set the load-variance rate to the highest available rate at which the die voltage stays within a predetermined interval of the setpoint voltage of voltage regulator 724. In some examples, the predetermined interval may be $\pm 5\%$, $\pm 2\%$, $\pm 1\%$, *etc.* In fully digital load-control strategies, as shown in FIGS. 7 and 8, load-variance rates may be controlled via one or more clock frequencies. Accordingly, a load-variance manager 748 may select a clock frequency based on whether the die voltage exceeds a predetermined interval bracketing the setpoint voltage. If the die voltage is within the predetermined interval, then a higher clock frequency may be chosen, thereby increasing the load-variance rate. If the die voltage is outside the predetermined interval, then a lower clock frequency may be chosen, thereby decreasing the load-variance rate. In this manner, the load-variance rate is urged to the highest available rate at which the die voltage stays within the predetermined interval.

In this manner, the latency of the clock-speed ramp-up can be dynamically reduced. In the example circuit board of FIG. 7, difference amplifier 750 of load-variance manager 748 resolves the (optionally amplified) difference between setpoint voltage *VID* and die voltage $V_{die}$. In this way, the die voltage is referenced to the setpoint voltage of the voltage regulator 724. This difference is provided as input to an analog-to-digital converter (ADC) 752, which is configured to digitize the difference in the form of an n-bit output. Digital comparator 754 compares the output of the ADC to another digital input, which is set to a predetermined fraction of setpoint voltage *VID-e.g.,* 5% of VID in the illustrated example. In other words, the digital comparator is configured to compute a comparison of the difference relative to the predetermined fraction of the setpoint voltage *VID.* In practice, the fraction can be determined based on the maximum allowable voltage droop. If $(VID - V_{die})$ is less than the predetermined fraction of *VID,* then the output of digital comparator goes high; otherwise, it stays low. Other fractions, such as 1%, 2%, 10%, for example, may be used instead.

In the example circuit board of FIG. 7, the output of digital comparator 754 provides a select line to multiplexer (MUX) 756. The multiplexer 756 is configured to receive a plurality of pulse trains differing in frequency and to select a clock frequency based on the comparison. In the example shown, two different pulse trains are provided as input to the multiplexer, at 1X and 2X frequency. The 1X frequency may be predetermined according to the worst-case latency tolerance. In this example configuration, the output of the multiplexer is the clock input of up / down counter 734 described hereinabove. If the digital comparator output is low, then the 1X frequency pulse train is applied to the counter. If it is high, then the 2X frequency pulse train is applied, thereby reducing the latency of the clock-speed change. Naturally, the pulse train frequency ratios 1X and 2X are merely examples, as any suitable ratios may be used. In some examples, the digital comparator may provide a more granular output, capable of selecting from among a greater number of pulse-train frequencies, using a larger multiplexer.

Whenever the die voltage is higher, indicating lower load current, a higher-frequency clock is selected by the multiplexer 756. Thus, up / down counter 734 counts faster, which reduces the time between the steps of frequency divider 732, thereby reducing the overall latency. In this manner, the load-variance manager 748 sets the load-variance rate to the highest available rate at which the die voltage stays within a predetermined interval bracketing the setpoint voltage of voltage regulator 724.

FIG. 8 shows aspects of an example circuit board 804 including one or more load-varying ICs 826 coupled operatively to a voltage regulator 824. As in the previous example, the load-varying ICs are arranged on a semiconductor die 828, which may or may not be the same die on which the voltage regulator is arranged. In this example, the one or more load-varying ICs are configured to energize or de-energize power-gated domain 836.

To that end, example circuit board 804 includes a resistor ladder 838 with one end connected to an always-on supply, $V_{cc}$, and the other end connected to $V_{ss}$ (GND). In this example, the resistors in the resistor ladder can all have an equal value ($R$). The intermediate voltages from the resistor ladder are connected to analog multiplexer (MUX) 840. The select lines of the analog multiplexer are generated by digital counter 842. The drawing illustrates a 3-bit select line analog MUX and corresponding resistor ladder, but other bit counts are also envisaged. In the illustrated example, the counter counts down from 111 to 000 in seven steps.

In some examples, the duration of each count down is defined based on the time required for the gated domain to ramp up to the expected voltage, $V_{ref}$. Accordingly, the one or more load-varying ICs 826 may be configured to apply power to the power-gated domain using a voltage ramp of invariant slope. During the countdown, the voltage at the gate of power FET (field-effect transistor, PFET) 844 ramps down in steps, thereby limiting the surge of current through the PFET. At each value of the gate voltage, the PFET presents a different resistance between the source and drain terminals, which corresponds to the changing load on voltage regulator 824. In the illustrated example, the voltage of the gated domain ($V_{cc}$\_PG) is sensed and compared against a pre-defined reference voltage $V_{ref}$, in order to detect completion of the power-up process and generate a 'power-good' (PWRGOOD) signal at comparator 846.

The examples in the table below illustrate control of the PFET gate voltage for a countdown duration of 100 nanoseconds for each step and a $V_{cc}$ voltage of 1 volt. In this example, the latency is 700 nanoseconds (ns). Accordingly, at given size of the PFET, the gated domain may require 700 ns to ramp up to the expected voltage, $V_{ref}$. This latency will vary based on the size of the power gated domain. The latency may be even higher for gated domains with a larger total device capacitance to be charged.

Table 1. Ramp down of PFET gate voltage in steps and corresponding latency.

| MUX Select | PFET gate voltage (volt) | Latency (ns) |
| --- | --- | --- |
| 111 | 1.00 | 0 |
| 110 | 0.86 | 100 |
| 101 | 0.71 | 200 |
| 100 | 0.57 | 300 |
| 011 | 0.43 | 400 |
| 010 | 0.29 | 500 |
| 001 | 0.14 | 600 |
| 000 | 0.00 | 700 |

Because neither the load transient nor the voltage-regulator load line can be predicted with certainty, it is possible, and even likely, that setting the ramp rate according to the worst-case scenario may result in slower-than-necessary load adjustment-e.g., clock-speed or power-state adjustment. Therefore, to improve latency, in the example circuit design of FIG. 8, circuit board 804 includes a load-variance manager 848. As described hereinabove, the one or more load-varying ICs 826 are configured to vary the load on voltage regulator 824 at a load-variance rate. The load-variance manager 848 is configured to sense the die voltage $V_{die}$ on the semiconductor die 828 of the load-varying ICs 826 and to control the load-variance rate in a closed-loop manner based on the die voltage. More specifically, the load-variance manager 848 sets the load-variance rate to the highest available rate at which the die voltage stays within a predetermined interval of the setpoint voltage of voltage regulator 824.

As in the previous example, the latency of energizing and de-energizing power-gated domain 836 of FIG. 8 can be dynamically reduced in light of AVP data. In the example shown, difference amplifier 850 resolves the difference between the setpoint voltage $VID$ and die voltage $V_{die}$. This difference is provided as input to an analog-to-digital converter (ADC) 852, which is configured to digitize the difference in the form of an n-bit output. Digital comparator 854 compares the output of the ADC to another digital input, which is set to a predetermined fraction of the setpoint voltage $VID$. If ($VID - V_{die}$) is less than the predetermined fraction of $VID$, then the output of the digital comparator goes high; otherwise, it stays low. The output of the digital comparator provides a select line to multiplexer (MUX) 856, which selects the pulse train of the appropriate frequency.

In the example configuration shown, the output of multiplexer 856 is the clock input of counter 842 introduced hereinabove. In this example, if the digital comparator output is low, then the 1X frequency pulse train is used for the counter. If it is high, then the 2X frequency pulse train is used, thereby reducing the latency of the power-state change.

Whenever the die voltage is comparatively high, indicating lower load current, a faster clock is selected by the multiplexer 856. Thus, counter 842 counts faster, which reduces the time between gate-voltage selection steps of analog multiplexer 840, thereby reducing the overall latency. In this manner, the load-variance manager 848 sets the load-variance rate to the highest available value at which the die voltage stays within a predetermined interval bracketing the setpoint voltage of voltage regulator 824.

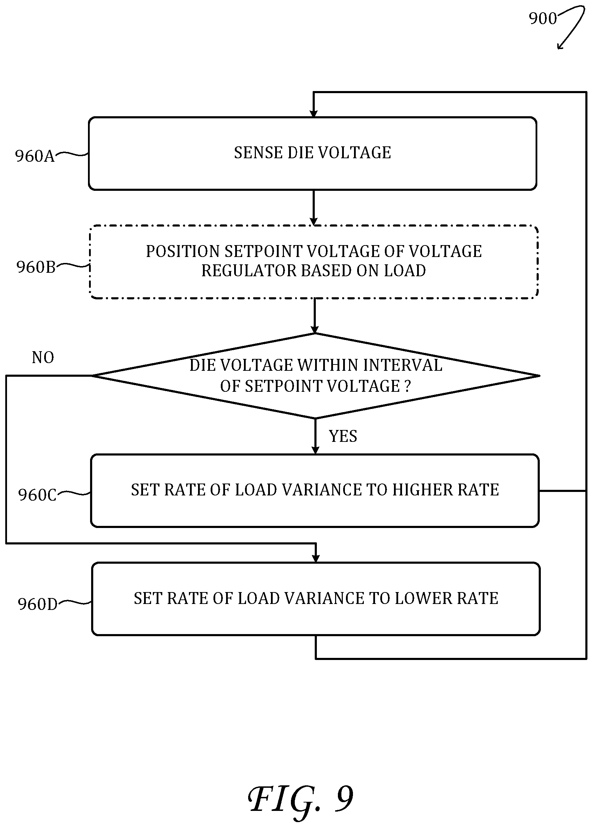

FIG. 9 shows aspects of an example method 900 for controlling the load-variance rate at which one or more load-varying integrated circuits vary a load on a voltage regulator.

At 960A of method 900, the load-variance manager senses a die voltage on a semiconductor die of the one or more load-varying integrated circuits. Optionally, at 960B, the voltage regulator positions the setpoint voltage at minimum allowable voltage at full load and at a maximum allowable voltage at minimal load.

At 960C, the load-variance manager sets the load-variance rate to a first rate if the die voltage sensed is within a predetermined interval of a setpoint voltage of the voltage regulator. At 960D, the load-variance manager sets the load-variance rate to a second rate lower than the first rate if the die voltage sensed is outside of the predetermined interval of the setpoint voltage of the voltage regulator. In method 900, the steps of positioning the setpoint voltage, sensing the die voltage, and setting the load-variance rate to the first or second rate are enacted repeatedly, in a closed-loop manner.

In some examples, setting the load-variance rate to the first rate and setting the load-variance rate to the second rate include resolving the difference between the setpoint voltage and the die voltage and setting the load-variance rate in response to the difference. In some examples, setting the load-variance rate to the first rate and setting the load-variance rate to the second rate include digitizing the difference, computing a comparison of the difference relative to a predetermined fraction of the setpoint voltage, and setting the load-variance rate in response to the comparison. In some examples, setting the load-variance rate to the first rate and setting the load-variance rate to the second rate include receiving a plurality of pulse trains differing in frequency, selecting a clock frequency based on the comparison, and setting the load-variance rate in response to the selected clock frequency. In some examples, setting the load-variance rate to the first rate and setting the load-variance rate to the second rate comprises changing a clock speed of a processor or computer-memory system. In some examples, setting the load-variance rate to the first rate and setting the load-variance rate to the second rate comprises controlling the rate of energizing or de-energizing a power-gated domain.

Method 900 makes particular reference to first and second rates. The method neither requires nor precludes one or more additional rates-e.g., rates greater than the first rate or lower than the second rate. As such, transition from the first to the second rate may be part of an overall decrease in load-variance rate and/or selected clock frequency, and transition from the second to the first rate may be part of an overall increase in load-variance rate and/or selected clock frequency. In the context of the examples illustrated in FIGS. 7 and 8, that extension would require only that the digital comparator (754 or 854) expose a more granular output for selection of additional clock frequencies in the multiplexer (756 or 856).

The control methods herein may be tied to a computer system of one or more computing devices. Such methods and processes may be implemented as an application program or service, an application programming interface (API), a library, and/or other computer-program product.

In conclusion, one aspect of this disclosure is directed to a system comprising a voltage regulator, an integrated circuit, and a load-variance manager. The voltage regulator is configured to regulate a die voltage on a semiconductor die, the voltage regulator having a setpoint voltage approaching a minimum allowable voltage at full load and a maximum allowable voltage at minimal load. The integrated circuit is arranged on the semiconductor die and configured to vary a load on the voltage regulator at a load-variance rate. Operatively coupled to the integrated circuit, the load-variance manager is configured to: (a) sense a die voltage on the semiconductor die; (b) select a clock frequency based on whether the die voltage exceeds a predetermined interval of the setpoint voltage; and (c) set the load-variance rate to a highest available rate at which the die voltage stays within the predetermined interval.

In some implementations the load-variance manager includes a difference amplifier configured to resolve a difference between the setpoint voltage and the die voltage, and the load-variance rate is responsive to the difference. In some implementations the load-variance manager includes an analog-to-digital convertor configured to digitize the difference and a digital comparator configured to compute a comparison of the difference relative to a predetermined fraction of the setpoint voltage. Here the load-variance rate is responsive to the comparison. In some implementations the load-variance manager includes a multiplexer configured to receive a plurality of pulse trains differing in frequency and to select the clock frequency based on the comparison, and the load-variance rate is responsive to the clock frequency selected. In some implementations the system is a motherboard of a computer system, and the semiconductor die supports a processor core of the computer system. In some implementations the integrated circuit is configured to change a clock speed of a processor or computer-memory system. In some implementations the integrated circuit is configured to energize or de-energize a power-gated domain.

Another aspect of this disclosure is directed to a method for controlling a load-variance rate at which one or more integrated circuits vary a load on a voltage regulator. The method comprises: (a) sensing a die voltage on a semiconductor die of the one or more integrated circuits; (b) setting the load-variance rate to a first rate if the die voltage sensed is within a predetermined interval of a setpoint voltage of the voltage regulator; and (c) setting the load-variance rate to a second rate, lower than the first rate, if the die voltage sensed is outside of the predetermined interval of the setpoint voltage of the voltage regulator.

In some implementations the steps of sensing the die voltage, setting the load-variance rate to the first rate, and setting the load-variance rate to the second rate are enacted repeatedly, in a closed-loop manner. In some implementations the method further comprises positioning the setpoint voltage at a minimum allowable voltage at full load of the voltage regulator and at a maximum allowable voltage at minimal load of the voltage regulator. In some implementations setting the load-variance rate to the first rate and setting the load-variance rate to the second rate include resolving a difference between the setpoint voltage and the die voltage and setting the load-variance rate in response to the difference. In some implementations setting the load-variance rate to the first rate and setting the load-variance rate to the second rate include digitizing the difference, computing a comparison of the difference relative to a predetermined fraction of the setpoint voltage, and setting the load-variance rate in response to the comparison. In some implementations setting the load-variance rate to the first rate and setting the load-variance rate to the second rate include receiving a plurality of pulse trains differing in frequency, selecting a clock frequency based on the comparison, and setting the rate in response to the clock frequency. In some implementations setting the load-variance rate to the first rate and setting the load-variance rate to the second rate comprise changing a clock speed of a processor or computer-memory system. In some implementations setting the load-variance rate to the first rate and setting the load-variance rate to the second rate comprise controlling a rate of energizing or de-energizing a power-gated domain.

Another aspect of this disclosure is directed to a system comprising a voltage regulator, one or more integrated circuits, and a load-variance manager. The voltage regulator is configured to regulate a die voltage on a semiconductor die.

The one or more integrated circuits are arranged on a semiconductor die and configured to vary a load on the voltage regulator at a load-variance rate. Operatively coupled to the one or more integrated circuits, the load-variance manager is configured to sense the die voltage and control the load-variance rate in a closed-loop manner based on the die voltage.

In some implementations controlling the load-variance rate includes setting the load-variance rate to a highest available rate at which the die voltage stays within a predetermined interval bracketing a setpoint voltage of the voltage regulator. In some implementations the setpoint voltage approaches a minimum allowable voltage at full load of the voltage regulator and a maximum allowable voltage at minimal load of the voltage regulator. In some implementations controlling the load-variance rate includes selecting a clock frequency based on whether the die voltage exceeds a predetermined interval of the setpoint voltage. In some implementations the voltage regulator is arranged on the die.

This disclosure is presented by way of example and with reference to the attached drawing figures. Components, process steps, and other elements that may be substantially the same in one or more of the figures are identified coordinately and described with minimal repetition. It will be noted, however, that elements identified coordinately may also differ to some degree. It will be further noted that the figures are schematic and generally not drawn to scale. Rather, the various drawing scales, aspect ratios, and numbers of components shown in the figures may be purposely distorted to make certain features or relationships easier to see.

It will be understood that the configurations and/or approaches described herein are exemplary and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed. The functional and/or conditional logic illustrated herein neither requires nor excludes suitable additional logic, executing in combination with the illustrated logic, to provide additional benefits.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A system (704, 804) comprising:

    a voltage regulator (724, 824) configured to regulate a die voltage on a semiconductor die (728, 828), the voltage regulator having a setpoint voltage approaching a minimum allowable voltage at full load and a maximum allowable voltage at minimal load;
    an integrated circuit (726, 826) arranged on the semiconductor die and configured to vary a load on the voltage regulator at a load-variance rate; and
    a load-variance manager (748, 848) operatively coupled to the integrated circuit, the load-variance manager configured to:

        sense (960A) a die voltage on the semiconductor die;
        select (960C, 960D) a clock frequency based on whether the die voltage exceeds a predetermined interval of the setpoint voltage; and
        set (960C, 960D) the load-variance rate to a highest available rate at which the die voltage stays within the predetermined interval.

2. The system of claim 1, wherein the load-variance manager includes a difference amplifier configured to resolve a difference between the setpoint voltage and the die voltage, and wherein the load-variance rate is responsive to the difference.

3. The system of claim 2, wherein the load-variance manager includes:

    an analog-to-digital convertor configured to digitize the difference and a digital comparator configured to compute a comparison of the difference relative to a predetermined fraction of the setpoint voltage, and wherein the load-variance rate is responsive to the comparison; or
    a multiplexer configured to receive a plurality of pulse trains differing in frequency and to select the clock frequency based on the comparison, and wherein the load-variance rate is responsive to the clock frequency selected.

4. The system of claim 1, wherein the system is a motherboard of a computer system, and wherein the semiconductor die supports a processor core of the computer system.

5. The system of claim 1, wherein the integrated circuit is configured to:

   change a clock speed of a processor or computer-memory system; or
   energize or de-energize a power-gated domain.

6. A method (900) for controlling a load-variance rate at which one or more integrated circuits (726, 826) vary a load on a voltage regulator (724, 824), the method comprising:

   sensing (960A) a die voltage on a semiconductor die (728, 828) of the one or more integrated circuits;
   setting (960C) the load-variance rate to a first rate if the die voltage sensed is within a predetermined interval of a setpoint voltage of the voltage regulator; and
   setting (960D) the load-variance rate to a second rate, lower than the first rate, if the die voltage sensed is outside of the predetermined interval of the setpoint voltage of the voltage regulator.

7. The method of claim 6, wherein the steps of sensing the die voltage, setting the load-variance rate to the first rate, and setting the load-variance rate to the second rate are enacted repeatedly, in a closed-loop manner.

8. The method of claim 6, further comprising positioning the setpoint voltage at a minimum allowable voltage at full load of the voltage regulator and at a maximum allowable voltage at minimal load of the voltage regulator.

9. The method of claim 6, wherein setting the load-variance rate to the first rate and setting the load-variance rate to the second rate include resolving a difference between the setpoint voltage and the die voltage and setting the load-variance rate in response to the difference.

10. The method of claim 9, wherein setting the load-variance rate to the first rate and setting the load-variance rate to the second rate include digitizing the difference, computing a comparison of the difference relative to a predetermined fraction of the setpoint voltage, and setting the load-variance rate in response to the comparison.

11. The method of claim 10, wherein setting the load-variance rate to the first rate and setting the load-variance rate to the second rate include receiving a plurality of pulse trains differing in frequency, selecting a clock frequency based on the comparison, and setting the rate in response to the clock frequency.

12. The method of claim 6, wherein setting the load-variance rate to the first rate and setting the load-variance rate to the second rate comprise:

    changing a clock speed of a processor or computer-memory system; or
    controlling a rate of energizing or de-energizing a power-gated domain.

13. A system (704, 804) comprising:

    a voltage regulator (724, 824) configured to regulate a die voltage on a semiconductor die (728, 828);
    one or more integrated circuits (726, 826) arranged on a semiconductor die and configured to vary a load on the voltage regulator at a load-variance rate; and
    a load-variance manager (748, 848) operatively coupled to the one or more integrated circuits, the load-variance manager configured to sense the die voltage and control the load-variance rate in a closed-loop manner based on the die voltage.

14. The system of claim 13, wherein controlling the load-variance rate includes setting the load-variance rate to a highest available rate at which the die voltage stays within a predetermined interval bracketing a setpoint voltage of the voltage regulator;
    and optionally, wherein the setpoint voltage approaches a minimum allowable voltage at full load of the voltage regulator and a maximum allowable voltage at minimal load of the voltage regulator.

15. The system of claim 13, wherein:

controlling the load-variance rate includes selecting a clock frequency based on whether the die voltage exceeds a predetermined interval of the setpoint voltage; or
the voltage regulator is arranged on the die.

CIRCUIT BOARD 104

*FIG. 1*

214A     204A

206    222    218A    220

**FIG. 2A**

214B

206    222    218B    220

204B

**FIG. 2B**

318

*FIG. 3*

$$0.5 * (V_{max} - V_{min})$$

$$V_{max} - V_{min}$$

WITH AVP

TIME

*FIG. 4*

EP 4 610 781 A1

*FIG. 5B*

*FIG. 5A*

DIE CURRENT (I$_{die}$)

TIME

VID

= I * AVPLL

DIE VOLTAGE (V$_{die}$)

TIME

*FIG. 6*

FIG. 7

FIG. 8

EP 4 610 781 A1

900

960A — SENSE DIE VOLTAGE

960B — POSITION SETPOINT VOLTAGE OF VOLTAGE
REGULATOR BASED ON LOAD

NO

DIE VOLTAGE WITHIN INTERVAL
OF SETPOINT VOLTAGE ?

YES

960C — SET RATE OF LOAD VARIANCE TO HIGHER RATE

960D — SET RATE OF LOAD VARIANCE TO LOWER RATE

*FIG. 9*

# EP 4 610 781 A1

Europäisches
Patentamt

European
Patent Office

Office européen
des brevets

## EUROPEAN SEARCH REPORT

**Application Number**

EP 25 15 5388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/274642 A1 (DOSLUOGLU TANER [US] ET AL) 22 September 2016 (2016-09-22)<br>* paragraph [0005] - paragraph [0007] *<br>* paragraph [0020] - paragraph [0077] *<br>* figures 1-10 * | 1-15 | INV.<br>G06F1/324<br>G06F1/3296 |
| A | US 2016/357242 A1 (IHS HASSAN [US])<br>8 December 2016 (2016-12-08)<br>* paragraph [0005] - paragraph [0007] *<br>* paragraph [0014] - paragraph [0039] *<br>* figures 1-5 * | 1-15 | |

TECHNICAL FIELDS
SEARCHED     (IPC)

G06F

The present search report has been drawn up for all claims

| Place of search | Date of completion of the search | Examiner |
|---|---|---|
| The Hague | 18 June 2025 | Knutsson, Frédéric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 5388

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | Publication date | Patent family member(s) | | Publication date |
|---|---|---|---|---|
| US 2016274642 A1 | 22-09-2016 | CN | 107408888 A | 28-11-2017 |
| | | CN | 110502086 A | 26-11-2019 |
| | | EP | 3266099 A1 | 10-01-2018 |
| | | US | 9369040 B1 | 14-06-2016 |
| | | US | 2016274642 A1 | 22-09-2016 |
| | | WO | 2016141081 A1 | 09-09-2016 |
| US 2016357242 A1 | 08-12-2016 | CN | 108139786 A | 08-06-2018 |
| | | EP | 3304714 A1 | 11-04-2018 |
| | | US | 2016357242 A1 | 08-12-2016 |
| | | WO | 2016197152 A1 | 08-12-2016 |

EPO FORM P0459

For more details about this annex : see Official Journal of the European Patent Office, No. 12/82